# EUROPÄISCHE PATENTSCHRIFT

(11) **EP 2 730 203 B1**
(45) Veröffentlichungstag und Bekanntmachung des Hinweises auf die Patenterteilung: **07.12.2016**
(21) Anmeldenummer: 14153912.2
(22) Anmeldetag: 07.06.2011
(51) Int. Cl.: A47J 43/08, A47J 43/07, A47J 27/00

(54) **Küchenmaschine mit einem Rührgefäß sowie Verfahren zum Betreiben einer solchen Küchenmaschine**
Kitchen appliance with a mixing chamber and method for operating the same
Robot ménager avec récipient de mélange et procédé de fonctionnement d'un tel robot ménager

(30) Priorität: 11.06.2010 DE 102010017335
(43) Veröffentlichungstag der Anmeldung: 14.05.2014
(62) Teilanmeldung aus: 11168888.3
(73) Patentinhaber: Vorwerk & Co. Interholding GmbH, 42275 Wuppertal (DE)
(72) Erfinder: Weber, Klaus-Martin, 42109 Wuppertal (DE); Schomacher, Jutta, 42489 Wülfrath (DE)
(74) Vertreter: Müller, Enno

(56) Entgegenhaltungen:
- EP-A1- 1 969 980
- DE-A1- 3 535 939
- DE-A1- 4 414 825
- US-A- 4 541 573

## Beschreibung

Die Erfindung betrifft zunächst eine Küchenmaschine mit einem Rührgefäß und einem Antrieb für ein Rührwerk in dem Rührgefäß, wobei das Rührgefäß in seinem unteren Bereich aufheizbar ist, wobei weiter eine Rührwerk-Einstellung vorgesehen ist, in welcher mit einer vorgegebenen Rührzahl arbeitende Rührphasen durch Phasen selbsttätig sich einstellender, den Rührphasen gegenüber reduzierter Drehzahl unterbrochen sind.

Weiter betrifft die Erfindung eine Küchenmaschine mit einem Rührgefäß und einem Antrieb für ein Rührwerk in dem Rührgefäß, wobei das Rührgefäß in seinem unteren Bereich aufheizbar ist, wobei weiter eine Einstellung vorgesehen ist, in welcher Heizphasen durch Phasen selbsttätig sich einstellender, den Heizphasen gegenüber reduzierter Heizleistung unterbrochen sind.

Küchenmaschinen der in Rede stehenden Art sind bekannt, so insbesondere in Form von elektromotorisch betriebenen Küchenmaschinen für den Haushaltsbereich. Derartige Küchenmaschinen weisen ein bevorzugt vom Maschinengrundgehäuse abnehmbares Rührgefäß auf, in welchem Rührgefäß bevorzugt bodenseitig ein Rührwerk angeordnet ist. Letzteres ist in der Zuordnungsstellung des Rührgefäßes zu der Maschine über einen maschinenseitig vorgesehenen, mit dem Rührwerk kuppelbaren Elektromotor antreibbar. Weiter sind in diesem Zusammenhang Küchenmaschinen bekannt, bei welchen das Rührgefäß im unteren Bereich, d.h. im Bereich des Rührgefäßbodens, weiter bevorzugt im Einwirkungsbereich des Rührwerkes aufheizbar ist, dies bspw. zufolge Ausgestaltung des Rührgefäßbodens mit einer integrierten, elektrischen Widerstandsheizung.

Weiter sind diesbezüglich Lösungen bekannt, bei welchen eine über die Rührgefäßwandung auf das in dem Rührgefäß befindliche Gargut einwirkende Induktionsheizung vorgesehen ist.

Bevorzugt sind sowohl die Rührwerkdrehzahl als auch die Heizleistung über maschinenseitige Regler oder Taster durch den Benutzer voreinstellbar. Darüber hinaus sind Lösungen bekannt, bei welchen fest voreinstellbare Rührwerk- und/oder Heizleistungs-Einstellungen vorgenommen werden können, in welchen Einstellungen in einem vorgegebenen Rhythmus der Rührwerkantrieb oder die Heizleistung zwischen einem vorgegebenen Maximalwert und einem vorgegebenen Minimalwert auf- und abgeregelt wird, wobei die Phasen erhöhter Rührwerkdrehzahlen bzw. erhöhter Heizleistung zu den Phasen reduzierter Drehzahlen bzw. Heizleistung in einem festen zeitlichen Verhältnis zueinander stehen.

Zum Stand der Technik ist auf die US 4,541,573 A und die DE 35 35 939 A1 zu verweisen. Aus der US '573 ist es bekannt, Rührphasen durch Phasen P geringerer Rühraktivität zu unterbrechen. Das Maß, um welches die Rühraktivität in der Phase geringerer Rühraktivität vermindert ist, ist hierbei fest vorgegeben. Aus der DE '939 A1 ist eine Küchenmaschine zum Zerkleinern von Lebensmitteln bekannt. Eine Drehzahl des ein Schneidwerkzeug antreibenden Elektromotors ist im Hinblick auf die erfasste Belastung unterschiedlich. Selbsttätig sich einstellende, den Rührphasen gegenüber reduzierter Drehzahl der Rührwerk-Einstellung ist nicht vorgesehen.

Ausgehend von dem dargelegten Stand der Technik beschäftigt sich die Erfindung mit der Aufgabenstellung, eine Küchenmaschine anzugeben, bei welcher eine Zubereitung von Gargut in Entsprechung zu einer manuellen Zubereitung in üblichen Gargefäßen erreicht werden kann.

Diese Aufgabe ist zunächst durch den Gegenstand des Anspruches 1 gelöst, wobei darauf abgestellt ist, dass die reduzierte Drehzahl zufolge das Rührgefäß bzw. das darin befindliche Gargut und/oder den Antrieb des Rührwerks betreffende Messdaten bestimmt ist.

Diese Aufgabe ist auch durch den Gegenstand des Anspruches 2 gelöst, wobei darauf abgestellt ist, dass die reduzierte Heizleistung zufolge das Rührgefäß bzw. das darin befindliche Gargut und/ oder den Antrieb des Rührwerks betreffende Messdaten bestimmt ist.

Zufolge der vorbeschriebenen Lösungen ist eine Anpassung der reduzierten Drehzahl oder der reduzierten Heizleistung, ggf. auch eine Reduzierung von Drehzahl und Heizleistung, abhängig von erfassten Messdaten vorgesehen. Die Anpassung oder Reduzierung ist an über die Messdaten ermittelbare Zustände anpassbar.

Die Anpassung erfolgt bspw. im Sinne einer Regelung der Rührwerksdrehzahlen und/oder der Heizleistung, weiter bevorzugt im Sinne einer Anpassung der zeitlichen Verhältnisse von Rührphasen erhöhter Drehzahl zu Rührphasen demgegenüber verringerter Drehzahl bzw. des Verhältnisses erhöhter Heizleistung zu dergegenüber reduzierten Heizleistung.

So ist in vorteilhafter Weise zufolge entsprechender Anpassung in Abhängigkeit der erfassten Messdaten eine Zubereitung von Gargut in dem Rührgefäß ähnlich einer händischen Zubereitung von Gargut in üblichen Gargefäßen ermöglicht. So ist weiter bevorzugt abhängig von den erfassten Messdaten und bspw. hieraus resultierender Anpassung des Verhältnisses von bspw. Rührphasen erhöhter Drehzahl zu Rührphasen reduzierter Drehzahl ein gelegentliches händisches Rühren mit einem Rührwerkzeug (bspw. Löffel oder Spatel) nachempfunden.

Bei einer, wie weiter vorgeschlagenen, Anpassung des Verhältnisses von Heizphasen erhöhter Heizleistung zu Heizphasen reduzierter Heizleistung ist hierdurch eine händische Heizleistungsanpassung bei üblichen Koch- und Gargefäßen nachempfunden. Bevorzugt reicht bereits allein ein Messwert zu einer entsprechenden Regelung. Jedoch können auch mehrere quasi zeitgleich erfasste Messdaten zu einer Regelungsanpassung führen.

Bevorzugt ist eine Küchenmaschine der in Rede stehenden Art vorgesehen, bei welcher sowohl mit einer vorgegebenen Rührzahl arbeitende Rührphasen durch Phasen selbsttätig sich einstellender, den Rührphasen gegenüber reduzierter Drehzahl unterbrochen sind als auch in welcher Heizphasen durch Phasen selbsttätig sich einstellender, den Heizphasen gegenüber reduzierter Heizleistung unterbrochen sind, wobei zur Lösung der eingangs gestellten Aufgabe bevorzugt sowohl die reduzierte Drehzahl als auch die reduzierte Heizleistung zufolge das Rührgefäß bzw. das darin befindliche Gargut und/oder den Antrieb des Rührwerks betreffende Messdaten bestimmt ist.

In weiter bevorzugter Ausgestaltung ist vorgesehen, dass zufolge der erfassten Messdaten eine Reduzierung der Drehzahl und/oder eine Reduzierung der Heizleistung auf einen Wert von 30% bis 5%, darüber hinaus bevorzugt auf einen Wert von weniger als 5% der erhöhten Drehzahl bzw. Heizleistung selbsttätig erfolgt. Weiter bevorzugt ist die reduzierte Drehzahl und/ oder die reduzierte Heizleistung Null, womit entsprechend in den Phasen reduzierter Drehzahl bzw. Heizleistung ein Ausschalten des Rührwerkantriebs bzw. ein Ausschalten der Heizung erfolgt bzw. eine Absenkung der jeweiligen Versorgung auf Null oder zumindest einen Wert, der zu keiner Drehung und/oder Aufheizung führt. Angepasst an die erfassten Messdaten und bevorzugt unter Auswertung derselben werden unter Nutzung von empirisch ermittelten und in der Maschine abgelegten Vergleichswerten insbesondere die Phasen reduzierter Drehzahl bzw. reduzierter Heizleistung angepasst, entsprechend verlängert oder verkürzt, wobei bzgl. der Regelung der Heizphasen zufolge Verlängerung oder Verkürzung der Heizphasen reduzierter Heizleistung insgesamt eine mittlere, auf das Gargut einwirkende Heizleistung bestimmt wird.

Für das gelegentliche Umrühren insbesondere in Abhängigkeit von dem einen erfassten Messwert oder in Abhängigkeit von mehreren erfassten Messdaten wird in bevorzugter Ausgestaltung die Rührzeit und die Pausenzeit (Zeit reduzierter Drehzahl) zwischen zwei aufeinanderfolgenden Rührereignissen, die Zykluszeit als Summe von Rührzeit und Pausenzeit, sowie das Einschaltverhältnis definiert. Bevorzugt ist diesbezüglich ein zeitliches Verhältnis der Drehzahlen (Rührzeit zu Pausenzeit) von 5% bis 100%, wobei die Dauer eines Zyklus bevorzugt innerhalb eines Zeitfensters von 30 bis 300 Sekunden liegt. Die Vorgabe für diese Parameter ist abhängig von den erfassten Messdaten. Die Einstellung der mittleren Heizleitung erfolgt bevorzugt über ein stetes Ein- und Ausschalten der Heizung, weiter bevorzugt über ein stetes Ein- und Ausschalten der Heizung mit weiter bevorzugt voller Heizleistung. Die Einschaltzeit der Heizung und die Ausschaltzeit der Heizung bilden zusammen einen Heizzyklus. Bei maximaler Einschaltzeit ist die Ausschaltzeit der Heizung gleich Null, wobei die mittlere Heizleistung der Nennleistung der Heizung entspricht. Bei bspw. 50% Einschaltzeit entspricht die Einschaltzeit der Heizung der Ausschaltzeit der Heizung und die mittlere Heizleistung beträgt in diesem Fall 50% der Nennleistung. Insgesamt steht das Verhältnis von Rührzeiten bzw. Heizzeiten zu Pausenzeiten in einem variablen, von den erfassten Messdaten abhängigen Verhältnis, so dass eine automatische, kontinuierliche Anpassung der Verhältnisse an den erfassten Messdaten erreicht ist.

So ist in diesem Zusammenhang weiter bevorzugt, dass der Messwert der Motorstrom des Rührwerkantriebs in der Rührphase ist, welcher Motorstrom als Kenngröße für das Antriebsmoment des Rührwerks dient. Ein erhöhtes Antriebsmoment deutet auf eine höhere Viskosität und/oder einen hohen Gargut-Füllstand hin. In diesem Fall wird bevorzugt die Dauer und die Häufigkeit des Rührens erhöht. Fällt der erfasste Motorstrom unter einen bevorzugt vorgegebenen Grenzwert, so erfolgt bevorzugt eine Neuregelung des Verhältnisses von Rührphasen erhöhter Drehzahl zu Rührphasen reduzierter Drehzahl, insbesondere Rührphasen mit einer Drehzahl von Null Umdrehungen pro Minute.

Alternativ, weiter bevorzugt kombinativ zu dem vorbeschriebenen Messwert ist der Messwert die Medientemperatur bzw. ein die Medientemperatur repräsentierender Temperaturwert. So stellt eine erhöhte erfasste Temperatur ein erhöhtes Anbrennrisiko dar. In diesem Fall wird bevorzugt die Dauer und/ oder die Häufigkeit des Rührens erhöht, um so einem Anbrennen des Garguts entgegenzuwirken. Zur Erfassung insbesondere eines die Medientemperatur repräsentierenden Temperaturwertes wird die Ist-Temperatur der Heizung erfasst, so insbesondere zufolge Anordnung eines Heizflächen-Temperaturfühlers bspw. in dem Bereich einer rührgefäßbodenseitig vorgesehenen Widerstandsheizung. Weiter alternativ oder auch kombinativ ist eine weitere Temperaturüberwachungseinrichtung vorgesehen, bevorzugt zur unmittelbaren Erfassung der Medientemperatur, weiter bevorzugt zufolge Anordnung eines ggf. zweiten Medien-Temperaturfühlers, welcher weiter bevorzugt mit vertikalem Abstand von wenigen Millimetern oberhalb der Bodenfläche des Rührgefäßes wandungsinnenseitig des Rührgefäßes vorgesehen ist. Die vorbeschriebenen Temperaturfühler sind weiter bevorzugt lokal begrenzte Temperatursensoren mit PTC- oder NTC-Verhalten.

Die Berechnung der Einschaltzeit der Heizung basiert entsprechend bevorzugt auf der gemessenen Heizungs- bzw. Garguttemperatur und ist Ergebnis des Heizungsregelalgorithmus. Aus einer gemessenen Heizungstemperatur wird über den Zusammenhang der Wärmeleitung der bevorzugt gefäßbodenseitig vorgesehen Heizscheibe und des Wärmeübergangs in das Gargut die tatsächliche Medientemperatur abgeleitet.

In weiter bevorzugter Ausgestaltung ist der Messwert der Medientemperatur-Anstieg innerhalb eines vorgegebenen Zeitraumes von bevorzugt 1 Sekunde bis 30 Sekunden. Entsprechend resultiert der Temperaturanstieg aus der Differenz zwischen aktueller Temperatur und der um eine feste Zeit zurückliegend ermittelten Temperatur.

Ein erhöhter Temperaturanstieg zeigt an, dass ein Gargut weniger wässrig ist und eher zum Anbrennen neigt oder dass der Wärmeübergangskoeffizient des Garguts ungünstig ist. Entsprechend erfolgt bevorzugt eine Erhöhung der Dauer und/ oder der Häufigkeit des Rührens und/ oder eine Reduzierung der mittleren Heizleistung.

Die Erfindung betrifft weiter ein Verfahren zum Betreiben einer Küchenmaschine mit einem Rührgefäß und einem Antrieb für ein Rührwerk in dem Rührgefäß, wobei das Rührgefäß in seinem unteren Bereich aufheizbar ist, wobei weiter eine Rührwerk-Einstellung vorgesehen ist, in welcher mit einer vorgegebenen Rührzahl arbeitende Rührphasen durch Phasen selbsttätig sich einstellender, den Rührphasen gegenüber reduzierter Drehzahl unterbrochen sind.

Zudem betrifft die Erfindung ein Verfahren zum Betreiben einer Küchenmaschine mit einem Rührgefäß und einem Antrieb für ein Rührwerk in dem Rührgefäß, wobei das Rührgefäß in seinem unteren Bereich aufheizbar ist, wobei weiter eine Einstellung vorgesehen ist, in welcher Heizphasen durch Phasen selbsttätig sich einstellender, den Heizphasen gegenüber reduzierter Heizleistung unterbrochen sind.

Um ein Verfahren der in Rede stehenden Art weiter zu verbessern, wird auch vorgeschlagen, dass die reduzierte Drehzahl zufolge das Rührgefäß bzw. das darin befindliche Gargut und/oder den Antrieb des Rührwerks betreffende Messdaten bestimmt wird. Ein weiterer unabhängiger Lösungsvorschlag gemäß dem Gegenstand des Anspruches 10 sieht vor, dass die reduzierte Heizleistung zufolge das Rührgefäß bzw. das darin befindliche Gargut und/oder den Antrieb des Rührwerks betreffende Messdaten bestimmt wird. Zufolge der unabhängigen, darüber hinaus auch kombinierbaren Lösungen ist ein Verfahren angegeben, welches eine Zubereitung von Gargut in dem Rührgefäß der Küchenmaschine bevorzugt anpassbar an eine händische Zubereitung von Gargut erreicht werden kann.

Hinsichtlich weiterer Vorteile sowie ergänzender oder alternativer Merkmale im Zusammenhang mit dem verfahrensmäßigen Aspekt wird auch auf die weiter oben schon beschriebenen Merkmale betreffend die Küchenmaschine als solche verwiesen.

Bezüglich aller angegebenen Wertebereiche sind alle Zwischenwerte, insbesondere in 1-Prozent-Schritten und/oder 1-Sekunden-Schritten sowohl hinsichtlich einer ein- oder mehrfachen Einengung der angegebenen Bereichsgrenzen in bspw. der angegebenen Schrittweite, von oben und/oder von unten, wie auch zur Darstellung singulärer Werte innerhalb der angegebenen Bereiche hiermit in die Offenbarung eingeschlossen.

Nachstehend ist die Erfindung anhand der beigefügten Zeichnung, welche lediglich ein Ausführungsbeispiel darstellt, näher erläutert. Es zeigt:
- Fig. 1: eine Küchenmaschine der in Rede stehenden Art mit einem in die Maschine eingesetzten Rührgefäß, in Seitenansicht;

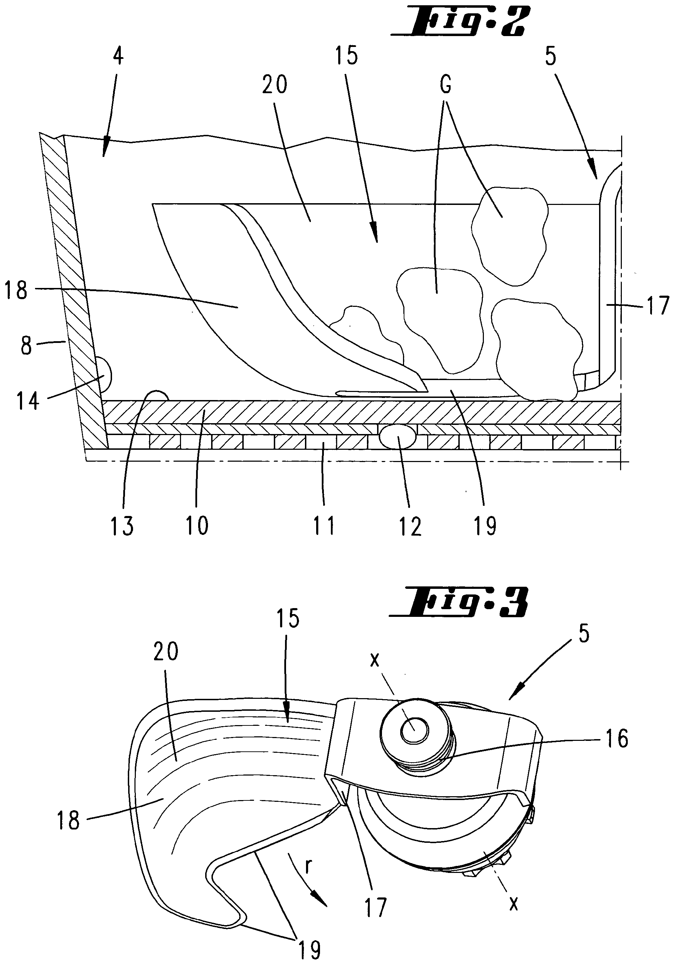

- Fig. 2: eine schematische Schnittdarstellung des Bereiches II in Fig. 1, allein den Rührgefäßbodenbereich betreffend;
- Fig. 3: das Rührwerk des Rührgefäßes in perspektivischer Einzeldarstellung;

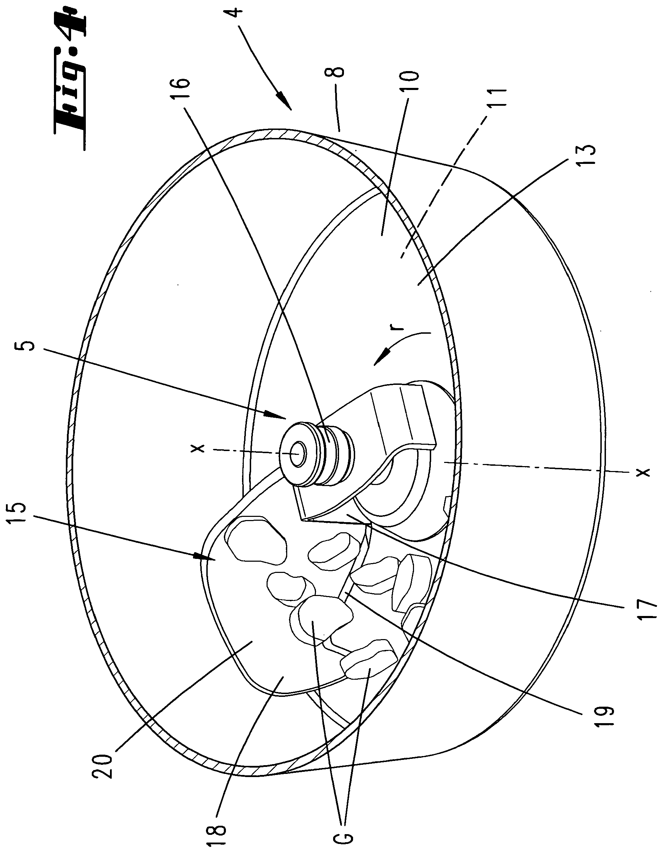

- Fig. 4: in einer perspektivischen Horizontalschnittdarstellung den Bodenbereich des Rührgefäßes mit darin angeordnetem Rührwerk und weiter in dem Rührgefäß angeordneten Gargutstücken;
- Fig. 5: ein Diagramm zur Darstellung variabler Einschaltintervalle des Rührwerks;
- Fig. 6: ein Diagramm zur Darstellung der variablen Einschaltintervalle der Heizung;
- Fig. 7: ein Diagramm zur Darstellung eines Temperaturanstiegs in Abhängigkeit zur Zeit;
- Fig. 8: eine Diagrammzusammenstellung zur Darstellung des Zusammenhangs von erfasster Garguttemperatur, Temperaturanstieg, Verhältnis von Rührzeiten zu Rühr-Pausenzeiten und Heizzeiten zu Heiz-Pausenzeiten, einen ersten Hauptzustand betreffend;
- Fig. 9: eine der Fig. 8 entsprechende Diagrammdarstellung, einen zweiten Hauptzustand betreffend;
- Fig. 10: eine weitere der Fig. 8 entsprechende Darstellung, betreffend einen dritten Hauptzustand;
- Fig. 11: eine weitere der Fig. 8 entsprechende Darstellung, einen vierten Hauptzustand betreffend;
- Fig. 12: ein Diagramm zur Darstellung der Änderung des Verhältnisses von Rührwerkdreh- zu Pausenzeiten in Abhängigkeit von einer gemessenen Gargut-Ist-Temperatur.

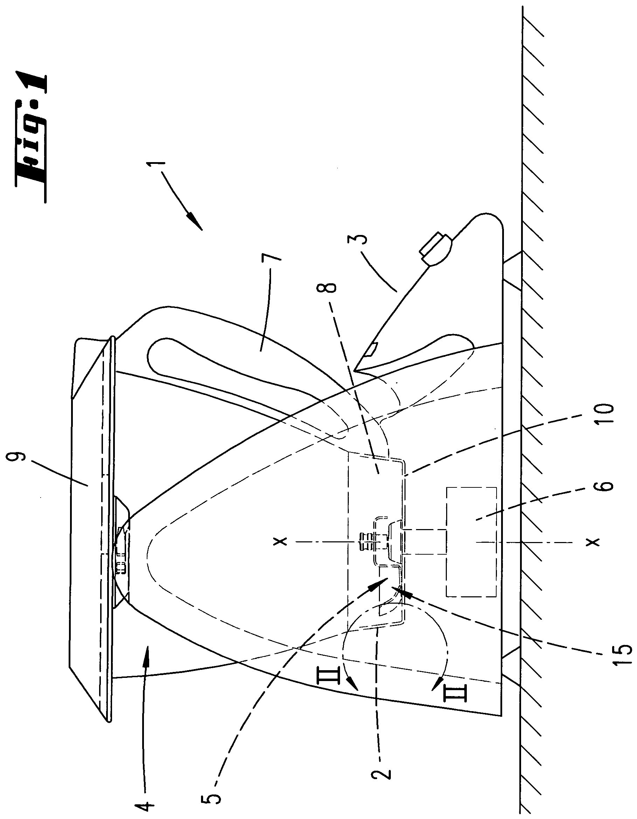

Dargestellt und beschrieben ist zunächst mit Bezug zu Fig. 1 eine Küchenmaschine 1 mit einer Rührgefäßaufnahme 2 und einem Bedienfeld 3.

Der Küchenmaschine 1 ist ein Rührgefäß 4 zuordbar, in dem dieses in die Rührgefäßaufnahme 2 eingesetzt wird. Dem Rührgefäßboden 10 ist zugeordnet ein Rührwerk 5 vorgesehen, welches über einen in der Küchenmaschine 1 unterhalb der Aufnahme 2 angeordneten, lediglich schematisch dargestellten Elektroantrieb 6 betrieben wird.

Das in die Rührgefäßaufnahme 2 einzusetzende Rührgefäß 4 besitzt einen senkrecht ausgerichteten Haltegriff 7. Der Sockelbereich 8 des Rührgefäßes 4 ist topfartig mit kreisrundem Querschnitt ausgebildet und zur Beheizung des Rührgefäßes 4 geeignet bzw. hierzu ausgeformt.

Die mit einem entsprechenden Rührwerk 5 in dem Rührgefäß 4 ausgestattete Küchenmaschine 1 dient in üblicher Weise zum Verrühren, Mixen und/oder Garen von Gargut, wozu weiter das Rührgefäß 4 mittels eines Deckels 9 verschlossen ist.

Über das Bedienfeld 3 ist mittels Schalter und/ oder Taster die Rührwerksdrehzahl, darüber hinaus auch die in dem Rührgefäßboden 10 vorgesehene Widerstandsheizung 11 einstellbar.

In dem Rührgefäßboden 10, weiter in unmittelbarer Zuordnung zu der unter dem Gefäßboden 10 angeordneten Widerstandsheizung 11 ist ein Heizflächen-Temperaturfühler 12 vorgesehen. Dieser überwacht die Temperatur der Heizleiterbahnen der Widerstandsheizung 11, aus welcher Temperatur die korrespondierende Temperatur an der Bodenoberfläche 13 über den Zusammenhang der Wärmeleitung berechnet werden kann. Die Messwerte werden über eine nicht dargestellte Leitung an eine maschinenseitige Steuereinheit übertragen.

Mit vertikalem Abstand von wenigen Millimetern, in dem dargestellten Ausführungsbeispiel etwa 5 mm, oberhalb der Bodenfläche 13. des Rührgefäßes 4 ist ein Medien-Temperaturfühler 14 wandungsinnenseitig des Rührgefäßes 4 vorgesehen. Auch dessen Messinformationen werden über eine Leitung an die Auswerteeinheit übermittelt.

Die Lage des Medien-Temperaturfühlers 14 ist oberhalb der Grenzschicht von kritischem Gargut G und außerhalb des direkten Einflusses der Widerstandsheizung 11 gewählt. Dieser Medien-Temperaturfühler 14 dient insbesondere dem Ist-Vergleich der zu erzielenden Gargut-Temperatur und besitzt eine hinreichende Messgenauigkeit.

Sowohl der Heizflächen-Temperaturfühler 12 als auch der Medien-Temperaturfühler 14 sind in dem dargestellten Ausführungsbeispiel lokal begrenzte Temperatursensoren mit PTC- oder NTC-Verhalten.

Alternativ zu der vorgeschlagenen Ausgestaltung des Heizflächen-Temperaturfühlers 12 kann die Temperatur an der Bodenoberfläche 13 auch aus dem Ableitstrom eines Dielektrikums ermittelt werden, welches bspw. zwischen dem, dem aufzuheizenden Gargut zugewandten Heizboden und einer Leiterbahn der Widerstandsheizung 11 angeordnet ist. Über eine vorgesehene Leitung wird der Leckstrom über die weiter vorgesehene Auswerteeinheit der Küchenmaschine 1 zur Steuerung der Heizleistung erfasst.

Die zu den Temperaturfühlern 12 und/oder 14 führenden Leitungen des aus der Küchenmaschine 1 bzw. aus der Rührgefäßaufnahme 2 entnehmbaren Rührgefäßes 4 sind, wie auch die Leitungen zur Spannungsversorgung der Widerstandsheizung über in der Rührgefäßaufnahme 2 vorgesehene, nicht dargestellte Steckkontakte elektrisch kontaktierbar.

Das Rührwerk 5 im Rührgefäß 4 ist in dem dargestellten Ausführungsbeispiel mit einem Hebearm 15 versehen. Dieser erstreckt sich in einer Richtung radial ausgehend von der Rührwerkachse x und weist zunächst einen mit der Rührwerkwelle 16 drehfest verbundenen Vertikalabschnitt 17 auf, der in Richtung auf die Bodenfläche 13 gerichtet verläuft. Dieser Vertikalabschnitt 17 trägt endseitig einen Schaufelabschnitt 18, dessen in Drehrichtung r betrachteter Randbereich entgegen der üblichen, messerartigen Ausgestaltung von Rührwerkzeugen einen Stumpfabschnitt 19 ausformt. Dieser bewegt sich zufolge Drehung des Rührwerkes 5 in einer minimal zu der Bodenfläche 13 beabstandeten Parallelebene, weiter bevorzugt in einem Abstand von 1 mm bis 10 mm. In Drehrichtung r dem Stumpfabschnitt 19 folgend ist der Schaufelabschnitt 18 mit einem Anhebeabschnitt 20 versehen, der sich ausgehend von dem Stumpfabschnitt 19 gleichmäßig, schaufelartig gegenüber der Bodenfläche 13 anhebt und somit entsprechend endseitig einen gegenüber dem Stumpfabschnitt 19 vergrößerten vertikalen Abstand zur Bodenfläche 13 aufweist.

Zufolge der vorbeschriebenen Ausgestaltung des Rührwerkes 5 ist ein Rührwerkzeug geschaffen, dessen Hebearm 15 im Zuge eines Rührens von Gargut G, insbesondere von Gargutstücken, bspw. Fleischstücken, zu einem regelmäßigen Wenden des Garguts führt. Hierbei unterfährt der Stumpfabschnitt 19 des Hebearms 15 das Gargut G zerstörungsfrei, woraufhin zufolge entsprechender Drehung des Hebearms 15 das Gargut G über den Anhebeabschnitt 20 von der Bodenfläche 13 angehoben wird und bevorzugt zufolge Abstützung bzw. Nachrücken folgender Gargutstücke über den in Drehrichtung r endseitigen Rand des Anhebeabschnittes 20 unter Wenden des Gargutstückes abgeworfen wird.

Um insbesondere eine unerwünschte Veränderung der Konsistenz des Garguts G durch zu intensives Rühren und/ oder zu intensiver Beheizung entgegenzuwirken, ist eine selbsttätige Steuerung des Rührwerks 5 und/oder der Widerstandsheizung 11 vorgesehen.

Während des Kochens von Gargut G mit stückigen Bestandteilen, die erhalten bleiben sollen, wird durch eine Reduktion der mechanischen Bewegungsenergie die Relativbewegung des betreffenden Garguts G zueinander und zur umgebenden Gefäßwandung sowie zum rotierenden Rührwerk 5 minimiert. Die Bewegung geschieht hierbei bedarfsgesteuert selbsttätig bevorzugt aus den aus der Temperaturregelung gewonnenen Kenndaten. Ein gelegentliches Rühren empfindet hierbei das manuelle Umrühren bei der konventionellen Kochmethode nach.

Das Verhältnis von Rührzeiten zu Rührpausenzeiten steht hierbei bevorzugt in einem variablen Verhältnis, wobei als Eingangsgrößen für das Verhältnis und die absolute Dauer der Rührzeit bevorzugt folgende Parameter einzeln oder in Kombination berücksichtigt werden:
- der Motorstrom des Rührwerkantriebs 6 als Kenngröße für das Antriebsmoment;
- der Ist-Temperaturwert der Heizungsregelung über den Medien-Temperaturfühler 14 als aktuelle Medientemperatur;
- der aktuelle Temperaturanstieg;
- das Signal des Heizflächen-Temperaturfühlers 12, welches ggf. den Zustand eines Anbrennens anzeigt.

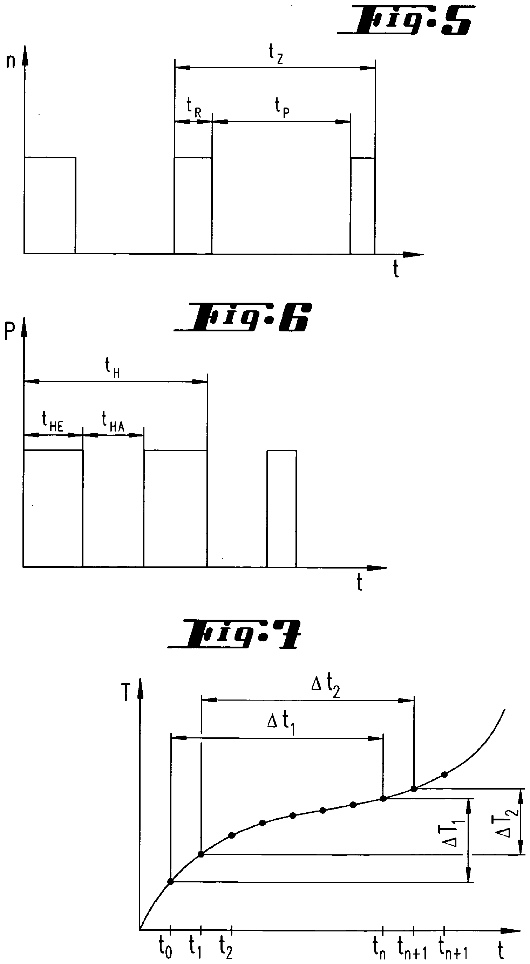

Für das gelegentliche Umrühren kann die Rührzeit t_{R}, die Rührpausenzeit t_{P} zwischen zwei aufeinanderfolgenden Rührereignissen, die Zykluszeit tz als Summe von Rührzeit und Rührpausenzeit, sowie das Einschaltverhältnis C=t_{R}/t_{Z} definiert werden (vgl. Fig. 5).

Bevorzugt sind diesbezüglich Verhältnisse C von 5% bis 100%. Die Dauer eines Zyklus tz liegt bevorzugt innerhalb eines Zeitfensters von 30 Sekunden bis 300 Sekunden. Die Vorgabe für diese Parameter ist hierbei bevorzugt abhängig von den Zustandsgrößen der Heizungsregelung und der Veränderung des Aufnahmestroms des Rührwerk-Elektroantriebs 6 als Maß für die Änderung des Motordrehmoments.

Die Einstellung der mittleren Heizleistung geschieht bevorzugt über ein stetes Ein- und Ausschalten der Heizung mit der vollen Heizleistung (vgl. Fig. 6). Die Einschaltzeit t_{HE} der Heizung und die Ausschaltzeit t_{HA} der Heizung bilden zusammen einen Heizzyklus t_{H}. Bei maximaler Einschaltzeit t_{HE} ist die Ausschaltzeit t_{HA} gleich Null; die mittlere Heizleistung entspricht der Nennleistung der Heizung. So entspricht bei einer beispielhaften Einschaltzeit t_{HE} von 50% diese der Ausschaltzeit t_{HA}, wobei entsprechend die mittlere Heizleistung 50% der Nennleistung beträgt.

Die Berechnung der Einschaltzeit t_{HE} basiert auf der gemessenen Heizungstemperatur T_{H} an dem Heizflächen-Temperaturfühler 12 und ist das Ergebnis des Heizungsregelungsalgorithmus. Aus der gemessenen Heizungstemperatur T_{H} wird über den Zusammenhang der Wärmeleitung der Heizscheibe und des Wärmeübergangs in das Gargut G die tatsächliche Medientemperatur abgeleitet.

Mit der Temperaturregelung werden die folgenden Zustände verarbeitet:
- aktuelle mittlere Heizleistung aus der Einschaltzeit der Widerstandsheizung 11 und der Nenn-Heizleistung;
- gemessene Ist-Temperatur an der Widerstandsheizung 11;
- Temperaturanstieg T_{Rate} aus der Differenz zwischen aktueller Temperatur und der um die feste Zeit Δt zurückliegend ermittelten Temperatur.

Wie beispielhaft in Fig. 7 dargestellt wird der Temperaturanstieg T_{Rate} durch das Verhältnis von ΔT (Temperaturdifferenz) und Δt (Zeitdifferenz) ermittelt, wobei Werte für Δt bevorzugt zwischen 1 Sekunde und 30 Sekunden liegen.

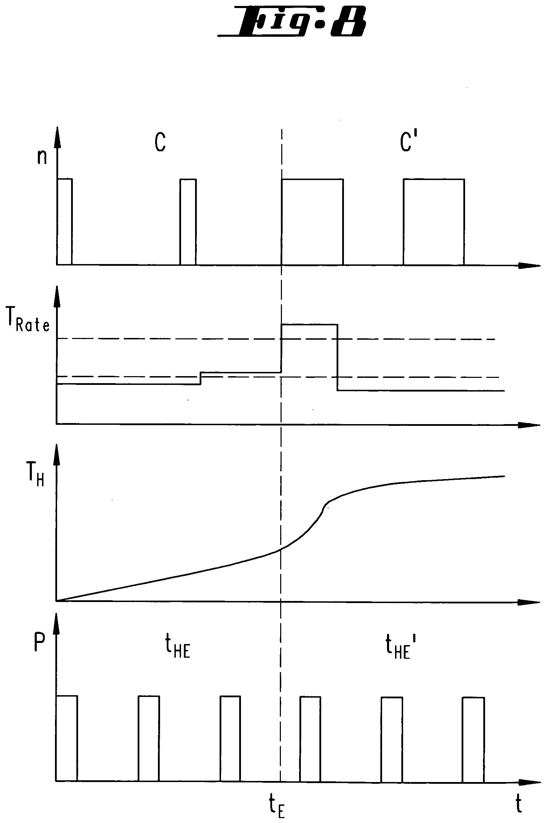

Aus der Einschaltzeit t_{HE} der Widerstandsheizung 11 und dem Temperaturanstieg T_{Rate} lassen sich die anhand der Figuren 8 bis 11 dargestellten vier Hauptzustände ableiten.

So zeigt die Diagrammzusammenstellung in Fig. 8 den Zusammenhang in einem ersten Hauptzustand. Bei geringer Einschaltzeit t_{HE} der Heizung und gleichzeitig hohem Temperaturanstieg T_{Rate} (hier T_{Rate}>14 K/min) zu einem vorgegebenen Zeitpunkt t_{E} deutet dies auf ein Gargut G hin, dass zum Anbrennen neigt. Der schlechte Wärmeübergang zwischen der Heizung und dem Gargut G führt zu einer Temperaturerhöhung T_{H} an der Heizung, die von dem Heizflächen-Temperaturfühler 12 an der Widerstandsheizung 11 erfasst wird. Als Reaktion hierauf wird das Verhältnis C von Rührzeit zu Rührpausenzeit beispielhaft nach C' erhöht. Die Einschaltzeit t_{HE} der Widerstandsheizung 11 wird zunächst nicht weiter reduziert, so dass die Einschaltzeit t_{HE}' auch nach dem vorgegebenen Zeitpunkt t_{E} weiter dem Einschaltwert t_{HE} entspricht.

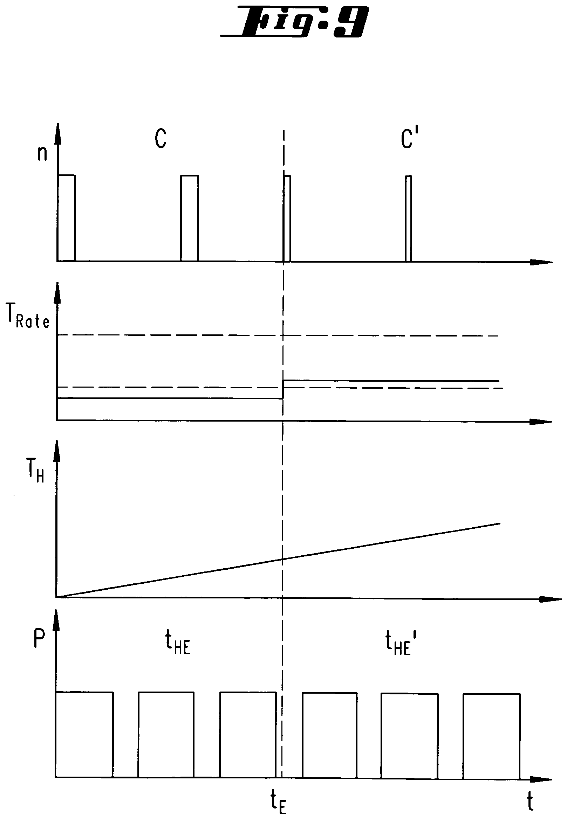

Fig. 9 zeigt einen zweiten Hauptzustand, bei welchem bei hoher Einschaltzeit t_{HE} der Heizung und gleichzeitig niedrigem Temperaturanstieg T_{Rate} (hier zu einem Zeitpunkt t_{E} Temperaturanstieg von < 8 K/min) kein kritischer Zustand besteht. Das Verhältnis C wird beispielhaft auf einen Wert C' reduziert. Die Einschaltzeit t_{HE} der Heizung 11 befindet sich bereits auf hohem Niveau und wird in dem dargestellten Beispiel beibehalten, womit t_{HE}' dem Einschaltzeitwert t_{HE} vor dem Zeitpunkt t_{E} entspricht.

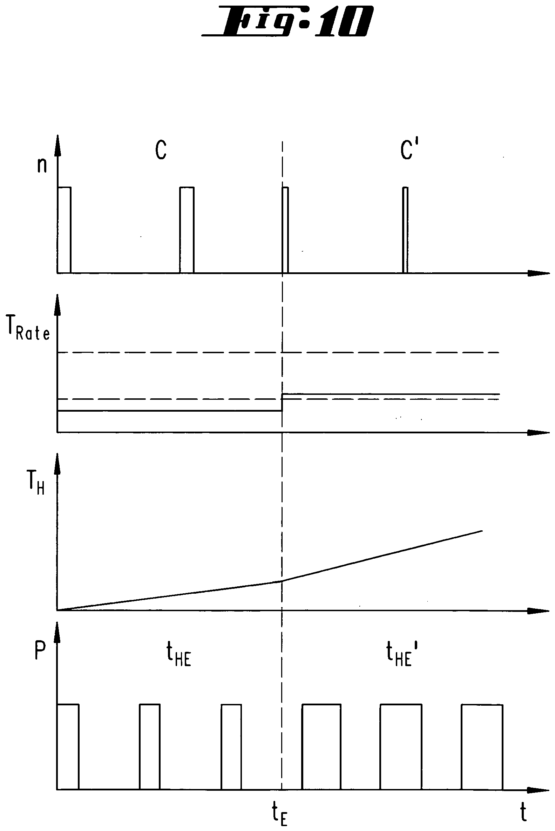

Bei geringer Einschaltzeit t_{HE} der Heizung und gleichzeitig geringem Temperaturanstieg T_{Rate} (vgl. Fig. 10; zum Zeitpunkt t_{E} Temperaturanstieg < 8 K/min) besteht kein kritischer Zustand. Das Verhältnis C wird beispielhaft zu C' reduziert. Die Einschaltzeit t_{HE} befindet sich auf geringem Niveau und wird in dem dargestellten Beispiel auf t_{HE}' erhöht.

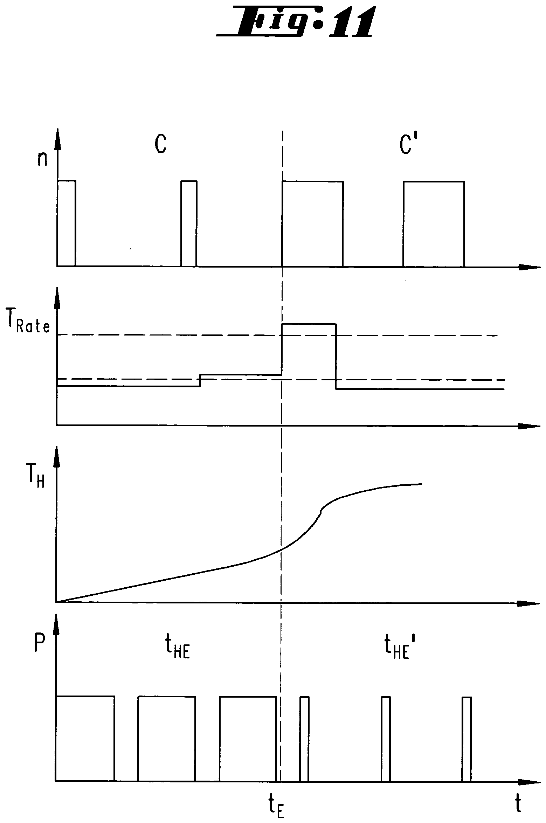

Gemäß Fig. 11 deutet mit Bezug auf einen vierten Hauptzustand eine hohe Einschaltzeit t_{HE} der Heizung und ein gleichzeitig hoher Temperaturanstieg T_{Rate} (zu einem Zeitpunkt t_{E} ein Temperaturanstieg von > 14 K/min) auf ein Gargut G hin, das zum Anbrennen neigt. Der schlechte Wärmeübergang zwischen Heizung und Gargut G führt zu einer Temperaturerhöhung T_{H} an der Heizung, die von dem Heizflächen-Temperaturfühler 12 erfasst wird. Als Reaktion auf die Erhöhung des Temperaturanstieges T_{Rate} wird das Verhältnis C beispielhaft auf C' erhöht und die Einschaltzeit t_{HE} der Heizung idealerweise gleichzeitig von t_{HE} zu t_{HE}' reduziert.

Als zusätzliche Kenngröße dient die aktuelle Ist-Temperatur des Garguts G. Generell ist insbesondere der Temperaturbereich oberhalb von 70°C kritisch, ab dem z.B. Stärke verkleistert und damit den Wärmeübergang verschlechtert. In diesem Temperaturbereich kann die Erhöhung des Verhältnisses C verstärkt werden, um den Wärmeübergang zu verbessern.

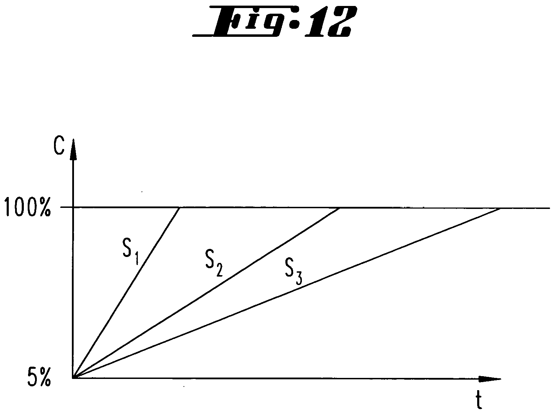

Die Änderung des Verhältnisses C erfolgt bevorzugt mit verschiedenen Steigungen (vgl. in Fig. 12 die Steigungen S₁ bis S₃).

Die Änderungsgeschwindigkeit einer Erhöhung des Verhältnisses C erfolgt weiter bevorzugt ebenfalls in Abhängigkeit der Medienviskosität. Die Viskosität wird als relative Viskositätsänderung aus dem Motorstrom des Rührwerkantriebs 6 ermittelt. So kann hierüber bspw. die Zugabe von Mehl, Stärke oder anderer das Gargut G andickender Medien erkannt werden. Bei entsprechender Viskositätsänderung kann der Anstieg des Rührwerk-Einschaltverhältnisses C - mit Bezug auf die Darstellung in Fig. 12 - bspw. von S₃ auf S₁ beschleunigt werden.

Es erfolgt eine Erhöhung des Verhältnisses C, bis der Temperaturanstieg T_{Rate} (ggf. bei gleichzeitiger Reduktion der Einschaltzeit t_{HE} der Heizung) unkritische Werte von ca. 11 K/min erreicht.

Die Erhöhung des Verhältnisses C kann bei einem kritischen Temperaturanstieg T_{Rate} von mehr als 14 K/min auch direkt auf bis zu 100% erfolgen, bis (ggf. bei gleichzeitiger Reduktion der Einschaltzeit t_{HE} der Heizung) wieder unkritische Werte für T_{Rate} erzielt werden.

### Bezugszeichenliste

- 1: Küchenmaschine
- 2: Rührgefäßaufnahme
- 3: Bedienfeld
- 4: Rührgefäß
- 5: Rührwerk
- 6: Elektroantrieb
- 7: Haltegriff
- 8: Sockelbereich
- 9: Deckel
- 10: Rührgefäßboden
- 11: Widerstandsheizung
- 12: Heizflächen-Temperaturfühler
- 13: Bodenfläche
- 14: Medien-Temperaturfühler
- 15: Hebearm
- 16: Rührwerkwelle
- 17: Vertikalabschnitt
- 18: Schaufelabschnitt
- 19: Stumpfabschnitt
- 20: Anhebeabschnitt

- n: Drehzahl
- r: Drehrichtung
- t: Zeit
- t_{E}: Zeitpunkt
- t_{H}: Heizzykluszeit
- t_{HA}: Heizung-Ausschaltzeit
- t_{HE}: Heizung-Einschaltzeit

- t_{HE}': Heizung-Einschaltzeit
- t_{P}: Rührpausenzeit
- t_{R}: Rührzeit
- t_{Z}: Rührzykluszeit
- x: Rührwerkachse
- Δt: Zeitdifferenz

- C: Einschaltverhältnis
- C': Einschaltverhältnis
- G: Gargut
- P: Heizleistung
- S₁: Steigung
- S₂: Steigung
- S₃: Steigung
- T: Temperatur
- T_{H}: Temperatur-Heizung
- T_{Rate}: Temperaturanstieg
- ΔT: Temperaturdifferenz

## Patentansprüche

1. Küchenmaschine (1) mit einem Rührgefäß (4) und einem Antrieb (6) für ein Rührwerk (5) in dem Rührgefäß (4), wobei das Rührgefäß (4) in seinem unteren Bereich aufheizbar ist, wobei weiter eine Rührwerk-Einstellung vorgesehen ist, in welcher mit einer vorgegebenen Rühszahl arbeitende Rührphasen durch Phasen selbsttätig sich einstellender, den Rührphasen gegenüber reduzierter Drehzahl (n) unterbrochen sind, **dadurch gekennzeichnet, dass** die reduzierte Drehzahl (n) zufolge das Rührgefäß (4) bzw. das darin befindliche Gargut (G) und/oder den Antrieb (6) des Rührwerks (5) betreffende Messdaten bestimmbar ist.

2. Küchenmaschine (1) mit einem Rührgefäß (4) und einem Antrieb (6) für ein Rührwerk (5) in dem Rührgefäß (4), wobei das Rührgefäß (4) in seinem unteren Bereich aufheizbar ist, wobei weiter eine Einstellung vorgesehen ist, in welcher Heizphasen durch Phasen selbsttätig sich einstellender, den Heizphasen gegenüber reduzierter Heizleistung (P) unterbrochen sind, **dadurch gekennzeichnet, dass** die reduzierte Heizleistung (P) zufolge das Rührgefäß (4) bzw. das darin befindliche Gargut (G) und/ oder den Antrieb (6) des Rührwerks (5) betreffende Messdaten bestimmbar ist.

3. Küchenmaschine (1) nach Anspruch 1, **dadurch gekennzeichnet, dass** die reduzierte Drehzahl (n) Null ist.

4. Küchenmaschine (1) nach Anspruch 2, **dadurch gekennzeichnet, dass** die reduzierte Heizleistung (P) Null ist.

5. Küchenmaschine (1) nach einem der vorhergehenden Ansprüche, **dadurch gekennzeichnet, dass** ein zeitliches Verhältnis (C, C') der Rührzeit zu der Zeit reduzierter Drehzahl (Pausenzeit) zwischen 5% und 100% liegt.

6. Küchenmaschine (1) nach einem der vorhergehenden Ansprüche, **dadurch gekennzeichnet, dass** der Messwert der Motorstrom des Rührwerkantriebs (6) in der Rührphase ist.

7. Küchenmaschine (1) nach einem der vorhergehenden Ansprüche, **dadurch gekennzeichnet, dass** der Messwert die Medientemperatur bzw. ein die Medientemperatur repräsentierender Temperaturwert (T) ist.

8. Küchenmaschine (1) nach einem der vorhergehenden Ansprüche, dass der Messwert der Medientemperatur-Anstieg (T_{Rate}) ist.

9. Verfahren zum Betreiben einer Küchenmaschine (1) mit einem Rührgefäß (4) und einem Antrieb (6) für ein Rührwerk (5) in dem Rührgefäß (4), wobei das Rührgefäß (4) in seinem unteren Bereich aufheizbar ist, wobei weiter eine Rührwerk-Einstellung vorgesehen ist, in welcher mit einer vorgegebenen Rührzahl arbeitende Rührphasen durch Phasen selbsttätig sich einstellender, den Rührphasen gegenüber reduzierter Drehzahl (n) unterbrochen sind, **dadurch gekennzeichnet, dass** die reduzierte Drehzahl (n) zufolge das Rührgefäß (4) bzw. das darin befindliche Gargut (G) und/oder den Antrieb (6) des Rührwerks (5) betreffende Messdaten bestimmt wird.

10. Verfahren zum Betreiben einer Küchenmaschine (1) mit einem Rührgefäß (4) und einem Antrieb (6) für ein Rührwerk (5) in dem Rührgefäß (4), wobei das Rührgefäß (4) in seinem unteren Bereich aufheizbar ist, wobei weiter eine Einstellung vorgesehen ist, in welcher Heizphasen durch Phasen selbsttätig sich einstellender, den Heizphasen gegenüber reduzierter Heizleistung unterbrochen sind, **dadurch gekennzeichnet, dass** die reduzierte Heizleistung (P) zufolge das Rührgefäß (4) bzw. das darin befindliche Gargut (G) und/oder den Antrieb (6) des Rührwerks (5) betreffende Messdaten bestimmt wird.

## Claims

1. Kitchen appliance (1) comprising a mixing vessel (4) and a drive (6) for a mixer (5) in the mixing vessel (4), it being possible to heat the lower region of the mixing vessel (4), a mixer adjustment further being provided in which mixing phases operating at a predetermined mixing speed are interrupted by phases that start automatically and have a rotational speed (n) that is reduced compared with the mixing phases, **characterised in that** the reduced rotational speed (n) can be determined according to measurement data relating to the mixing vessel (4) or the food to be cooked (G) located therein, and/or the drive (6) of the mixer (5).

2. Kitchen appliance (1) comprising a mixing vessel (4) and a drive (6) for a mixer (5) in the mixing vessel (4), it being possible to heat the lower region of the mixing vessel (4), an adjustment further being provided in which heating phases are interrupted by phases that start automatically and have a heat output (P) that is reduced compared with the heating phases, **characterised in that** the reduced heat output (P) can be determined according to measurement data relating to the mixing vessel (4) or the food to be cooked (G) located therein, and/or the drive (6) of the mixer (5).

3. Kitchen appliance (1) according to claim 1, **characterised in that** the reduced rotational speed (n) is zero.

4. Kitchen appliance (1) according to claim 2, **characterised in that** the reduced heat output (P) is zero.

5. Kitchen appliance (1) according to any of the preceding claims, **characterised in that** a time ratio (C, C') of the mixing time to the time having reduced rotational speed (pause time) is between 5 % and 100 %.

6. Kitchen appliance (1) according to any of the preceding claims, **characterised in that** the measured value is the motor current of the mixer drive (6) in the mixing phase.

7. Kitchen appliance (1) according to any of the preceding claims, **characterised in that** the measured value is the median temperature or a temperature value (T) that is representative of the median temperature.

8. Kitchen appliance (1) according to any of the preceding claims, **characterised in that** the measured value is the increase in the median temperature (T_{Rate}).

9. Method for operating a kitchen appliance (1) comprising a mixing vessel (4) and a drive (6) for a mixer (5) in the mixing vessel (4), it being possible to heat the lower region of the mixing vessel (4), a mixer adjustment further being provided in which mixing phases operating at a predetermined mixing speed are interrupted by phases that start automatically and have a rotational speed (n) that is reduced compared with the mixing phases, **characterised in that** the reduced rotational speed (n) is determined according to measurement data relating to the mixing vessel (4) or the food to be cooked (G) located therein, and/or the drive (6) of the mixer (5).

10. Method for operating a kitchen appliance (1) comprising a mixing vessel (4) and a drive (6) for a mixer (5) in the mixing vessel (4), it being possible to heat the lower region of the mixing vessel (4), an adjustment further being provided in which heating phases are interrupted by phases that start automatically and have a heat output that is reduced compared with the heating phases, **characterised in that** the reduced heat output (P) is determined according to measurement data relating to the mixing vessel (4) or the food to be cooked (G) located therein, and/or the drive (6) of the mixer (5).

## Revendications

1. Robot de cuisine (1), comprenant une cuve de brassage (4) et un dispositif d'entrainement (6) pour un élément de brassage (5) dans la cuve de brassage (4), dans lequel la cuve de brassage (4) peut être chauffée dans sa région inférieure, dans lequel en outre est prévu un réglage impliquant l'élément de brassage pour lequel des phases de brassage opérant à une vitesse de brassage prédéterminée sont interrompues par des phases qui se règlent automatiquement à une vitesse de rotation réduite (n) par rapport aux phases de brassage, **caractérisé en ce que** la vitesse de rotation réduite (n) est déterminée en fonction de données de mesure concernant la cuve de brassage (4) ou les aliments à cuire (G) qui s'y trouvent et/ou le dispositif d'entrainement (6) de l'élément de brassage (5).

2. Robot de cuisine (1), comprenant une cuve de brassage (4) et un dispositif d'entrainement (6) pour un élément de brassage (5) dans la cuve de brassage (4), dans lequel la cuve de brassage (4) peut être chauffée dans sa région inférieure, dans lequel en outre est prévu un réglage dans lequel des phases de chauffage sont interrompues par des phases qui se règlent automatiquement à une puissance de chauffe (P) réduite par rapport aux phases de chauffage, **caractérisé en ce que** la puissance de chauffe réduite (n) est déterminée en fonction de données de mesure concernant la cuve de brassage (4) ou les aliments à cuire (G) qui s'y trouvent et/ou le dispositif d'entrainement (6) de l'élément de brassage (5).

3. Robot de cuisine (1) selon la revendication 1, **caractérisé en ce que** la vitesse de rotation réduite (n) est nulle.

4. Robot de cuisine (1) selon la revendication 2, **caractérisé en ce que** la puissance de chauffe réduite (n) est nulle.

5. Robot de cuisine (1) selon l'une des revendications précédentes, **caractérisé en ce que** le rapport temporel (C, C') de la durée de brassage à la durée à vitesse de rotation réduite (temps de pause) est compris entre 5% et 100%.

6. Robot de cuisine (1) selon l'une des revendications précédentes **caractérisé en ce que** la valeur mesurée est le courant du moteur du dispositif d'entrainement (6) pendant la phase de brassage.

7. Robot de cuisine (1) selon l'une des revendications précédentes, **caractérisé en ce que** la valeur mesurée est la température de milieu ou une valeur de température (T) représentative de la température de milieu.

8. Robot de cuisine (1) selon l'une des revendications précédentes, **caractérisé en ce que** la valeur mesurée est l'accroissement de la température (T_{RATE}) de milieu.

9. Procédé de fonctionnement d'un robot de cuisine (1) comprenant une cuve de brassage (4) et un dispositif d'entrainement (6) pour un élément de brassage (5) dans la cuve de brassage (4), dans lequel la cuve de brassage (4) peut être chauffée dans sa région inférieure, dans lequel en outre est prévu un réglage impliquant l'élément de brassage pour lequel des phases de brassage opérant à une vitesse de brassage prédéterminée sont interrompues par des phases qui se règlent automatiquement à une vitesse de rotation réduite (n) par rapport aux phases de brassage, **caractérisé en ce que** la vitesse de rotation réduite (n) est déterminée en fonction de données de mesure concernant la cuve de brassage (4) ou les aliments à cuire (G) qui s'y trouvent et/ou le dispositif d'entrainement (6) de l'élément de brassage (5).

10. Procédé de fonctionnement d'un robot de cuisine (1), comprenant une cuve de brassage (4) et un dispositif d'entrainement (6) pour un élément de brassage (5) dans la cuve de brassage (4), dans lequel la cuve de brassage (4) peut être chauffée dans sa région inférieure, dans lequel en outre est prévu un réglage dans lequel des phases de chauffage sont interrompues par des phases qui se règlent automatiquement à une puissance de chauffe (P) réduite par rapport aux phases de chauffage, **caractérisé en ce que** la puissance de chauffe réduite (P) est déterminée en fonction de données de mesure concernant la cuve de brassage (4) ou les aliments à cuire (G) qui s'y trouvent et/ou le dispositif d'entrainement (6) de l'élément de brassage (5).
